# EUROPÄISCHE PATENTSCHRIFT

(11) **EP 1 374 001 B1**
(45) Veröffentlichungstag und Bekanntmachung des Hinweises auf die Patenterteilung: **07.06.2006**
(21) Anmeldenummer: 02724231.2
(22) Anmeldetag: 14.03.2002
(51) Int. Cl.: G05B 23/02

(54) **SCHALTSCHRANK ODER SCHALTSCHRANKANORDNUNG MIT EINER DARIN ANGEORDNETEN ÜBERWACHUNGSEINRICHTUNG**
SWITCHGEAR CABINET OR SWITCHGEAR CABINET ASSEMBLY COMPRISING A MONITORING DEVICE THAT IS ARRANGED THEREIN
ARMOIRE DE COMMANDE OU SYSTEME D'ARMOIRE DE COMMANDE AVEC DISPOSITIF DE CONTROLE INTEGRE

(30) Priorität: 20.03.2001 DE 10113626
(43) Veröffentlichungstag der Anmeldung: 02.01.2004
(73) Patentinhaber: Rittal GmbH & Co. KG, 35745 Herborn (DE)
(72) Erfinder: LAURÖSCH, Sven, 35708 Haiger (DE); KREILING, Jörg, 35444 Biebertal (DE); DAHMER, Ralf, 57462 Olpe (DE)
(74) Vertreter: Fleck, Hermann-Joseph
(86) Internationale Anmeldenummer: PCT/EP2002/002834
(87) Internationale Veröffentlichungsnummer: WO 2002/075468

(56) Entgegenhaltungen:
- EP-A- 0 864 950
- WO-A-97/34345
- DE-A- 19 615 469
- DE-A- 19 911 249
- DE-A- 19 911 318
- DE-A- 19 911 824
- US-A- 5 930 736

## Beschreibung

Die Erfindung bezieht sich auf einen Schaltschrank oder eine Schaltschrankanordnung mit mindestens einer darin angeordneten Überwachungseinrichtung für Schaltschrankfunktionen einschließlich Temperaturregulierung.

Ein derartiger Schaltschrank mit einer Überwachungseinrichtung, die auch Steuerungsaufgaben übernimmt, ist in der WO 97/34345 angegeben. Bei diesem bekannten Schaltschrank sind an eine zentrale Steuerungseinrichtung mit darin vorgesehenem Prozessor oder Mikrocontroller über Eingabe- und Ausgabeschnittstellen verschiedene, für den Betrieb und die Verwendung des Schaltschrankes an sich wichtige Sensoren, wie z.B. Temperaturfühler, Vibrationssensor, Rauchsensor, Feuchtefühler, Spannungsfühler, Türendschalter und dergleichen, sowie Aktoren und Datenübertragungsverbindungen zu externen Bediengeräten angeschlossen. Für die Temperaturregulierung können unterschiedliche Komponenten, wie z.B. Kühlgerät, Lüfter oder Heizung mit entsprechenden Steuerugs- oder Regelungskomponenten vorgesehen sein.

Der Erfindung liegt die Aufgabe zugrunde, einen Schaltschrank oder eine Schaltschrankanordnung der eingangs genannten Art bereitzustellen, der einem Anwender bei einfacher Bedienbarkeit erweiterte Überwachungs- bzw. Steuerungsmöglichkeiten bietet, wobei der Aufwand möglichst gering gehalten wird.

Diese Aufgabe wird mit den Merkmalen des Anspruchs 1 gelöst. Hiernach ist vorgesehen, dass die Überwachungseinrichtung über eine Verbindung an einen Überwachungsbaustein einer in dem Schaltschrank oder der Schaltschrankanordnung untergebrachten, für externe Funktionen zuständigen Rechnereinheit angeschlossen und zur Auswertung von dem Überwachungsbaustein empfangener Signale ausgebildet ist. Mit diesen Maßnahmen erhält der Benutzer bei einer Anwendung des Schaltschranks zum Einbau von Rechnereinheiten, wie z.B. Servern oder dgl., zusätzlich die Möglichkeit, mit der den Schaltschrankfunktionen zugeordneten Überwachungseinrichtung, mit der der Schaltschrank an unterschiedliche Einsatzbedingungen anpassbar ist, auch die darin aufgenommenen Rechnereinheiten hinsichtlich ihrer physikalischen Umgebungsbedingungen zu überwachen und gegebenenfalls durch geeignete Steuerungsmaßnahmen auch darauf Einfluss zu nehmen.

Eine vorteilhafte Ausgestaltung besteht darin, dass der Überwachungsbaustein zumindest zur Überwachung der ordnungsgemäßen Funktion eines Mikrocontrollers, einer Spannungsversorgung und/oder einer Kühleinheit der Rechnereinheit und zur Abgabe damit zusammenhängender Signale ausgebildet ist und dass die Überwachungseinrichtung zur Aufbereitung der diesbezüglichen empfangenen Signale und zur Weitergabe an eine Netzwerkschnittstelle zur Abfrage der aufbereiteten Daten über ein Netzwerk ausgebildet ist. Beispielsweise kann mit dem Überwachungsbaustein der Rechnereinheit auch ein unerlaubtes Öffnen des Rechnergehäuses überwacht und entsprechende Daten können an die Überwachungseinrichtung zur Auswertung weiter gegeben werden. Die Überwachungseinrichtung bietet eine im Schaltschrank bzw. der Schaltschrankanordnung integrierte oder integrierbare Kontrolleinrichtung, mittels der alle in den Schaltschrank anfallenden Überwachungsaufgaben zentral und einheitlich behandelt werden. Beispielsweise sind zusätzliche Anzeigen und diesbezügliche Steuerungen für die Überwachung der Rechnereinheiten nicht erforderlich.

Ist vorgesehen, dass die Überwachungseinrichtung über das Netzwerk mit einer entfernten Leitwarte in Verbindung steht, mit der die Schaltschrankfunktionen und die über den Überwachungsbaustein überwachten Funktionen der Rechnereinheit kontrollierbar und geeignete Reaktionen mittels über die Überwachungseinrichtung ansprechbarer Aktoren durchführbar sind, so kann z.B. bei einer entfernten Aufstellung in anderen Räumen oder Gebäuden oder auch einer Außenanwendung die Überwachung und gegebenenfalls Einflussnahme auch zum zuverlässigen Betrieb der Rechnereinheiten von der entfernten, zentralen Leitwarte aus übersichtlich vorgenommen werden, wobei unterschiedliche Datenwege, wie z.B. Wählverbindungen oder geeignete Netzwerke, wie lokale Netzwerke, Ethernet oder Internet nutzbar sind.

Zur Steigerung der Betriebssicherheit der Rechnereinheiten trägt die Überwachungseinrichtung dadurch bei, dass bei Erfassen einer fehlerhaften Funktion der Spannungsversorgung der Rechnereinheit oder deren Kühleinheit mittels der Überwachungseinrichtung eine in dem Schaltschrank vorgesehene, der Rechnereinheit zugeordnete oder zuordenbare Ersatzspannungsversorgung angeschaltet bzw. eine Ersatz-Kühleinheit eingeschaltet wird oder die Rechnereinheit ganz oder teilweise abgeschaltet wird.

Zur Einheitlichkeit, benutzerfreundlichen Bedienbarkeit und möglichst einfachem Aufbau tragen weiterhin die Maßnahmen bei, dass zur Anzeige und Konfigurierung der Überwachungseinrichtung diese über einen Anschluss mit einer in der Schaltschrankanordnung untergebrachten Serverumschalteinrichtung und über diese mit deren Anzeigesteuereinrichtung verbunden ist.

Bei einfachem Aufbau werden die Überwachungs- und damit zusammenhängenden Steuerungsmöglichkeiten bei einfacher Systemausgestaltung dadurch noch erweitert, dass der Überwachungsbaustein über eine weitere Verbindung mit mindestens einem weiteren Überwachungsbaustein einer weiteren Rechnereinheit in Datenaustauschverbindung gebracht ist und auch von dieser erhaltene Daten an die Überwachungseinrichtung abgibt. Dadurch können mehrere Rechnereinheiten hinsichtlich ihrer physikalischen Betriebsbedingungen bei einfacher Anordnung mit einer Überwachungseinrichtung überwacht werden.

Der einfache Aufbau wird weiterhin dadurch begünstigt, dass die Verbindung zwischen dem Überwachungsbaustein und der Überwachungseinrichtung und/oder die weitere Verbindung zwischen dem Überwachungsbaustein und dem weiteren Überwachungsbaustein als Busverbindung(en) ausgebildet ist/sind. Auch eine Vernetzung der unterschiedlichen Komponenten zur Überwachung und gegebenenfalls Steuerung der Klimatisierung, des Mikroprozessorsystems und/oder der Spannungsversorgung der Rechnereinheit (EN) kann mittels gängiger Bussysteme, beispielsweise I²C-, CAN-, LON-, IPMI, RS232-Bus oder Internet erfolgen.

Mittels der Überwachungseinrichtung können die für die Überwachung wichtigen Daten der Rechnereinheit (EN) auch dann erfasst werden, wenn ein Betriebssystem oder der Server nicht reagieren oder sogar abgeschaltet sind.

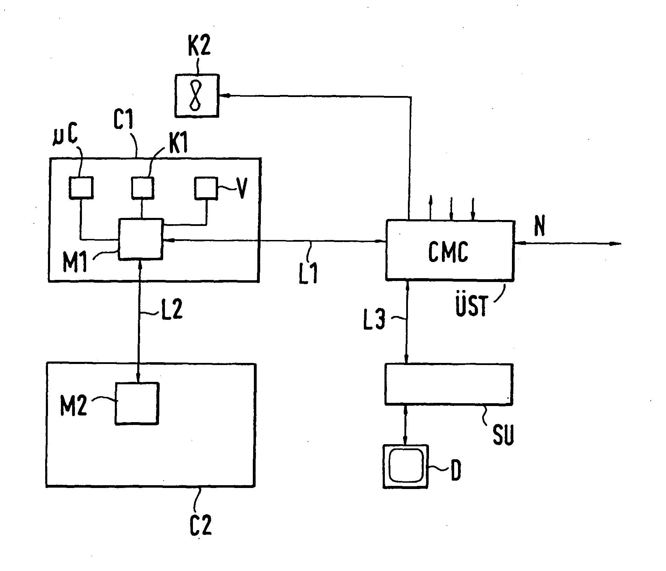

Die Erfindung wird nachfolgend anhand eines Ausführungsbeipsiels unter Bezugnahme auf die Zeichnung näher erläutert.

Unter Schaltschrank werden hier auch z.B. Serverschränke oder ähnliche Elektronikschränke verstehen.

Die Fig. zeigt in einem Blockschaltbild eine in einem Schaltschrank oder einer Schaltschrankanordnung vorgesehene Schaltschrank-Überwachungseinrichtung ÜST, die über eine Verbindung L1, vorzugsweise Busverbindung, mit einem Überwachungsbaustein M1 einer Rechnereinheit C1 verbunden ist. Bei dem Überwachungsbaustein M1 handelt es sich um einen bei einer solchen Einheit, wie z.B. CPU oder Compact PCI, Netzteil, Server in der Regel ohnehin vorhandenen Überwachungsbaustein, der verschiedene Software-Schnittstellen zur Hardware der Rechnereinheit C1 bietet und ferner auch einen Anschluss aufweist, der zum Anschluss der Überwachungseinrichtung ÜST über die Verbindung L1 genutzt wird. Mit dem Überwachungsbaustein M1 können verschiedene physikalische Systemparameter wie Temperatur, Versorgungsspannungen V, Kühleinheiten K1 insbesondere in Form von Lüftern, Netzteile und Detektorsignale bezüglich unerlaubten Öffnens des Rechnergehäuses sowie auch diesbezügliche abgespeicherte Daten überwacht werden. Der Überwachungsbaustein M1 wird vorzugsweise auch mit einer eigenen Spannungsversorgung betrieben, ist also unabhängig von der Versorgung der Rechnereinheit C1 im System. Zusätzlich kann er eine Reihe von A/D-Schnittstellen besitzen, mit deren Hilfe er die gesamte Spannungsversorgung der Rechnereinheit C1 überwacht. Über eine weitere Verbindung L2, insbesondere Busverbindung können Daten mit einem weiteren Überwachungsbaustein M2 einer weiteren Rechnereinheit C2 ausgetauscht werden. Über den weiteren Überwachungsbaustein M2 sind entsprechend noch weitere Überwachungsbausteine anschließbar.

Die Schaltschrank-Überwachungseinrichtung ÜST, die vorzugsweise alle die den Schaltschrank an sich betreffenden Überwachungs- und Steuerungsfunktionen erfüllt, wie in der eingangs genannten Druckschrift WO 97/34345 näher ausgeführt ist, und mit der sich entsprechende Parameter für verschiedene Einsatzbedingungen vorgeben zu lassen, erhält durch den Anschluss des Überwachungsbausteins M1 und gegebenenfalls darüber des weiteren Überwachungsbausteins M2 und durch die Ausbildung, die diesbezüglichen Daten auszuwerten und zu verarbeiten, zusätzliche Funktionen, die über die reine Überwachung des Schaltschranks an sich hinausgehen. Eine Einbeziehung auch der in den Schaltschrank oder die Schaltschrankanordnung eingebauten Rechnereinheiten C1, C2 hinsichtlich der physikalischen Gegebenheiten zu überwachen und erforderlichenfalls auch darauf Einfluss nehmen zu können, wird ermöglicht. Durch die Integration der Überwachung der Rechnereinheiten C1, C2 in die Überwachungseinrichtung ÜST wird einem Benutzer eine einheitliche Gesamtüberwachung mit einfacher, übersichtlicher Bedienung geboten.

Die mittels der Überwachungseinrichtung ÜST aufbereiteten Daten können über einen Netzwerkanschluss über ein Netzwerk N an eine entfernte Leitwarte einheitlich übertragen und dort dargestellt werden, so dass eine Bedienperson einfache Kontrollmöglichkeiten sowohl der Schaltschrankfunktionen als auch der physikalischen Gegebenheiten der Rechnereinheiten C1, C2 erhält und erforderlichenfalls geeignete Einflussnahmen über die Steuerfunktionen der Überwachungseinrichtung ÜST veranlassen kann. Beispielsweise kann bei Ausfall einer Kühleinheit K1 bzw. eines Lüfters der Rechnereinheit C1 eine in dem Schaltschrank ohnehin vorgesehene oder anordenbare weitere Kühleinheit K2 in Form eines Lüfters oder dergleichen zum Kühlen der Rechnereinheit C1 ersatzweise eingeschaltet werden. Bei Ausfall der Versorgung V ist eine Anschaltung der betreffenden Rechnereinheit C1 an eine in dem Schaltschrank vorhandene Ersatzversorgung möglich. Auch eine Abschaltung der Rechnereinheit C1 mittels der Überwachungseinrichtung ÜST ist durchführbar.

Die Überwachungseinrichung ÜST ist über einen Anschluss L3 mit einer Serverumschalteinrichtung SU und über diese mit einer Anzeigesteuereinrichtung D, insbesondere ein sogenanntes OSC (On Screen Display) verbunden. Mit der üblicherweise der Serverumschalteinrichtung SU zugeordneten Anzeigesteuereinrichtung D erübrigt es sich, die Überwachungseinrichtung ÜST selbst mit einer aufwendigen Anzeigeeinheit und einer diesbezüglichen Steuerung auszustatten. Über die Anzeigesteuereinrichtung D kann die Überwachungseinrichtung IST einfach und übersichtlich und unter Ausnutzung entsprechender Hardware und Software der Serverumschalteinrichtung SU bzw. der Anzeigesteuereinrichtung konfiguriert werden, um z.B. Vorgabewerte zum Ansprechen auch Sensorsignale und Parameter zum Ansprechen von Aktoren einstellen und Daten zur Kontrolle anzeigen zu können.

Mit den beschriebenen Maßnahmen wird es in Verbindung mit der Überwachungseinrichtung ÜST ermöglicht, die Funktionsfähigkeit von Schaltschränken zu verbessern.

## Patentansprüche

1. Schaltschrank oder Schaltschrankanordnung mit mindestens einer darin angeordneten Überwachungseinrichtung (ÜST) für Schaltschrankfunktionen einschließlich Temperaturregulierung,
**dadurch gekennzeichnet,**
**dass** die Überwachungseinrichtung (ÜST) über eine Verbindung (L1) an einen Überwachungsbaustein (M1) einer in dem Schaltschrank oder der Schaltschrankanordnung untergebrachten, für externe Funktionen zuständigen Rechnereinheit (C1) angeschlossen und zur Auswertung von dem Überwachungsbaustein empfangener Signale ausgebildet ist.

2. Schaltschrank oder Schaltschrankanordnung nach Anspruch 1,
**dadurch gekennzeichnet,**
**dass** der Überwachungsbaustein (M1) zumindest zur Überwachung der ordnungsgemäßen Funktion eines Prozessors (*µ*C) der Rechnereinheit (C1), einer Spannungsversorgung (V) der Rechnereinheit (C1) und/oder einer Kühleinheit (K1) der Rechnereinheit (C1) und zur Abgabe damit zusammenhängender Signale ausgebildet ist und
**dass** die Überwachungseinrichtung (ÜST) zur Aufbereitung der diesbezüglichen empfangenen Signale und zur Weitergabe an eine Netzwerkschnittstelle zur Abfrage der aufbereiteten Daten über ein Netzwerk (N) ausgebildet ist.

3. Schaltschrank oder Schaltschrankanordnung nach Anspruch 2,
**dadurch gekennzeichnet,**
**dass** die Überwachungseinrichtung (ÜST) über das Netzwerk (N) mit einer entfernten Leitwarte in Verbindung steht, mit der die Schaltschrankfunktionen und die über den Überwachungsbaustein (M1) überwachten Funktionen der Rechnereinheit (C1) kontrollierbar und geeignete Reaktio-nen mittels über die Überwachungseinrichtung ansprechbarer Aktoren durchführbar sind.

4. Schaltschrank oder Schaltschrankanordnung nach Anspruch 3,
**dadurch gekennzeichnet,**
**dass** bei Erfassen einer fehlerhaften Funktion der Spannungsversorgung (V) der Rechnereinheit (C1) oder deren Kühleinheit (K1) mittels der Überwachungseinrichtung eine in dem Schaltschrank vorgesehene, der Rechnereinheit (C1) zugeordnete oder zuordenbare Ersatzspannungsversorgung angeschaltet bzw. eine Ersatz-Kühleinheit (K2) eingeschaltet wird oder die Rechnereinheit (C1) ganz oder teilweise abgeschaltet wird.

5. Schaltschrank oder Schaltschrankanordnung,
**dadurch gekennzeichnet,**
**dass** zur Anzeige und Konfigurierung der Überwachungseinrichtung (ÜST) diese über einen Anschluss (L3) mit einer in der Schaltschrankanordnung untergebrachten Serverumschalteinrichtung (SU) und über diese mit deren Anzeigesteuereinrichtung (D) verbunden ist.

6. Schaltschrank oder Schaltschrankanordnung nach einem der vorhergehenden Ansprüche,
**dadurch gekennzeichnet,**
**dass** der Überwachungsbaustein (M1) über eine weitere Verbindung (L2) mit mindestens einem weiteren Überwachungsbaustein (M2) einer weiteren Rechnereinheit (C2) in Datenaustauschverbindung gebracht ist und auch von dieser erhaltene Daten an die Überwachungseinrichtung (ÜST) abgibt.

7. Schaltschrank oder Schaltschrankanordnung nach einem der vorhergehenden Ansprüche,
**dadurch gekennzeichnet,**
**dass** die Verbindung (L1) zwischen dem Überwachungsbaustein (M1) und der Überwachungseinrichtung (ÜST) und/oder die weitere Verbindung (L2) zwischen dem Überwachungsbaustein (M1) und dem weiteren Überwachungsbaustein (M2) als Busverbindung(en) ausgebildet ist/sind.

## Claims

1. Switchgear cabinet or switchgear cabinet assembly having at least one monitoring device (ÜST) disposed therein for switchgear cabinet functions, including temperature regulation,
**characterised in that**
the monitoring device (ÜST) is connected via a link (L1) to a monitoring module (M1) of a computer unit (C1) which is accommodated in the switchgear cabinet or the switchgear cabinet assembly, is responsible for external functions and is configured for evaluating signals received from the monitoring module.

2. Switchgear cabinet or switchgear cabinet assembly according to claim 1,
**characterised in that**
the monitoring module (M1) is configured at least for monitoring the correct functioning of a processor (µC) of the computer unit (C1), a voltage supply (V) of the computer unit (C1) and/or a cooling unit (K1) of the computer unit (C1) and for transmitting signals associated therewith and
**in that** the monitoring device (ÜST) is configured for processing the related received signals and for transmission to a network interface for querying the processed data via a network (N).

3. Switchgear cabinet or switchgear cabinet assembly according to claim 2,
**characterised in that**
the monitoring device (ÜST) is in communication via the network (N) with a remote control room, with which the switchgear cabinet functions and the functions of the computer unit (C1) which are monitored via the monitoring module (M1) can be controlled and suitable reactions can be implemented by means of actuators which can be actuated via the monitoring device.

4. Switchgear cabinet or switchgear cabinet assembly according to claim 3,
**characterised in that**,
upon detecting a defective function of the voltage supply (V), the computer unit (C1) or the cooling unit (K1) thereof, by means of the monitoring device, a replacement voltage supply, which is provided in the switchgear cabinet and is associated with or can be associated with the computer unit (C1), is switched on or a replacement cooling unit (K2) is switched on or the computer unit (C1) is switched off entirely or partially.

5. Switchgear cabinet or switchgear cabinet assembly,
**characterised in that**,
for display and configuring the monitoring device (ÜST), the latter is connected via a link (L3) to a server switch-over device (SU) which is accommodated in the switchgear cabinet assembly and connected via said server switch-over device to the display control device (D) thereof.

6. Switchgear cabinet or switchgear cabinet assembly according to one of the preceding claims,
**characterised in that**
the monitoring module (M1) is brought into data exchange connection via a further link (L2) with at least one further monitoring module (M2) of a further computer unit (C2) and data obtained from the latter is also transmitted to the monitoring device (UST).

7. Switchgear cabinet or switchgear cabinet assembly according to one of the preceding claims,
**characterised in that**
the link (L1)between the monitoring module (M1)and the monitoring device (ÜST) and/or the further link (L2) between the monitoring module (M1) and the further monitoring module (M2) is/are configured as bus connection(s).

## Revendications

1. Armoire de commande ou système d'armoire de commande avec au moins un dispositif de surveillance (ÜST) de fonctions de l'armoire de commande, comprenant une régulation de température, disposé à l'intérieur,
**caractérisée par le fait**
**que** le dispositif de surveillance (ÜST) est relié par une liaison L1 à un composant de surveillance (M1) d'une unité de calcul (C1) logée dans l'armoire de commande ou le système d'armoire de commande, responsable de fonctions externes et conçue pour évaluer des signaux reçus du composant de surveillance.

2. Armoire de commande ou système d'armoire de commande selon la revendication 1,
**caractérisée par le fait**
**que** le composant de surveillance (M1) est conçu au moins pour surveiller le bon fonctionnement d'un processeur (µC) de l'unité de calcul (C1), d'une alimentation électrique (V) de l'unité de calcul (C1) et/ou d'une unité de refroidissement (K1) de l'unité de calcul (C1) et pour délivrer des signaux y relatifs et
**que** le dispositif de surveillance (ÜST) est conçu pour mettre en forme les signaux reçus à ce sujet et les retransmettre à une interface réseau en vue de l'interrogation des données mises en forme via un réseau (N).

3. Armoire de commande ou système d'armoire de commande selon la revendication 2,
**caractérisée par le fait**
**que** le dispositif de surveillance (ÜST) est en liaison via le réseau (N) avec un poste de contrôle distant à partir duquel il est possible de contrôler les fonctions de l'armoire de commande et les fonctions de l'unité de calcul (C1) surveillées par le composant de surveillance (M1) et d'exécuter des réactions appropriées au moyen d'actionneurs déclenchables par le dispositif de surveillance.

4. Armoire de commande ou système d'armoire de commande selon la revendication 3,
**caractérisée par le fait**
**qu'**en cas de détection d'un fonctionnement défectueux de l'alimentation électrique (V), de l'unité de calcul (C1) ou de son unité de refroidissement (K1) au moyen du dispositif de surveillance, on connecte une alimentation électrique de remplacement associée ou associable à l'unité de calcul (C1), prévue dans l'armoire de commande, ou on met en service une unité de refroidissement de remplacement (K2) ou on déconnecte entièrement ou partiellement l'unité de calcul (C1).

5. Armoire de commande ou système d'armoire de commande,
**caractérisée par le fait**
**que** pour l'affichage et la configuration du dispositif de surveillance (ÜST), celui-ci est relié par une connexion (L3) à un dispositif de commutation de serveur (SU) logé dans le système d'armoire de commande et relié via celui-ci à son dispositif de commande d'affichage (D).

6. Armoire de commande ou système d'armoire de commande selon l'une des revendications précédentes,
**caractérisée par le fait**
**que** le composant de surveillance (M1) est en liaison d'échange de données avec au moins un autre composant de surveillance (M2) d'une autre unité de calcul (C2) par une autre liaison (L2) et délivre aussi les données reçues de celle-ci au dispositif de surveillance (ÜST).

7. Armoire de commande ou système d'armoire de commande selon l'une des revendications précédentes,
**caractérisée par le fait**
**que** la liaison (L1) entre le composant de surveillance (M1) et le dispositif de surveillance (ÜST) et/ou l'autre liaison (L2) entre le composant de surveillance (M1) et l'autre composant de surveillance (M2) est/sont réalisée(s) sous la forme de liaison(s) bus.
